# EUROPEAN PATENT SPECIFICATION

(11) **EP 2 784 112 B1**
(45) Date of publication and mention of the grant of the patent: **28.08.2019**
(21) Application number: 14001160.2
(22) Date of filing: 28.03.2014
(51) Int. Cl.: H01B 3/04, H01B 7/295, C09D 183/16, C09D 183/04, C08G 77/04, C08G 77/60, C08G 77/62

(54) **Dispersions for preparing a fire-resistant protective and insulating coating**
Dispersionen zur Herstellung einer feuerfesten Schutz- und Isolationsbeschichtung
Dispersions pour préparer un revêtement protecteur et isolant résistant au feu

(30) Priority: 28.03.2013 EP 13001608
(43) Date of publication of application: 01.10.2014
(73) Proprietor: Dätwyler Cabling Solutions AG, 6460 Altdorf (CH)
(72) Inventor: Schmucki, Beat, 6467 Schattdorf (CH); Parcianello, Giulio, 8050 Zürich (CH); Bayard, Konstantin, 6370 Oberdorf (CH); Vogt, Ulrich, 79798 Jestetten (DE); Dahm, Jürgen, 6463 Bürglen (CH)
(74) Representative: Samson & Partner Patentanwälte mbB

(56) References cited:
- EP-A1- 1 560 069
- WO-A2-2007/115834
- GB-A- 2 192 401
- JP-A- S5 747 764
- US-A1- 2006 177 686
- US-A1- 2011 011 447

## Description

### Field of the Invention

The present invention relates to a a method for preparing a metal substrate comprising a protective coating, selected coated metal substrates preparable by the method and a cable comprising the coated metal substrate.

### Background of the Invention

Safety cables are a special class of electric, signal or data cables that must ensure circuit integrity and functioning in the event of fire for a limited amount of time, during which they are capable to provide basic safety services required e.g. in fire detection, fire estinguishing and evacuation systems, so as to guarantee people's safety.

Fire-resistance properties of cables are currently achieved by the introduction of a fire-resistant layer to the cable structure. This layer, which is generally in direct contact with the copper wires, can provide a thermally stable, electrically insulating and mechanically reliable layer in case of fire, which must eventually prevent failures such as shortcuts.

State of the art fire-resistant layers usually comprises ceramifiable compositions and/or mica tape.

Ceramifiable compositions usually comprise organic and/or silicon-containing polymeric compounds loaded with inorganic fillers, e.g. wollastonite, alumina, calcium carbonate, that together can provide the formation of a thermally and mechanically stable ceramic insulating layer upon pyrolysis, the fillers usually representing the major part of the final ceramic residue. The final ceramic residue may also comprise some loose silica powder resulting from the thermal decomposition of silicone rubber, if used. These compositions are generally applied on copper cables by an extrusion process to produce a part of or the total of an insulation layer with variable thicknesses. For example, for a 1.5 mm² conductor a typical wall thickness of the ceramifiable layer is in the 0.2 -1.0 mm range. See e.g. DE 44 00 938 C1, EP 0 978 128 B1, EP 0 708 455 A1. GB 2460512, GB 2 360 780, WO 01/41159 A1, EP 1 347 464 A1, US 2007/0276071, WO 2004/035711 and WO 2005/095545.

JP S5747764, GB 2 192 401 A and WO 2007/115834 disclose solventless elastomeric compositions comprising one or more polyorganosiloxanes and mica as filler for the manufacture of e.g. flame-retarding insulations of conductors, such as cables and wires. The insulations are usually applied by extrusion.

US 2006/177686 A1 also discloses a process for coating a metal substrate. The process comprises a step of contacting an aluminum-containing powder with a polymer comprising a polysilane, polysiloxane, polysilazane, polycarbosilane or mixtures thereof to form a slurry, contacting the slurry with a transition metal catalyst and finally coating the metal substrate with the slurry.

US 2011/011447 A1 discloesed a method of forming a ceramic silicon oxide type coating by coating an organohydrogensiloxane/hydrogensiloxane copolymer on the surface of an inorganic base material and converting the coating into a ceramic silicon oxide type coating by heating to high temperatures in an inert gas or an oxygen-containing inert gas.

Another possible solution is represented by mica tape. Mica tape is usually made of mica paper bonded with polymeric binders and optionally glass or polymeric carrier or an equivalent solution, and is generally applied on copper cables by a winding process. Besides the relatively high costs of mica tape, the winding process is quite complex and rather expensive.

Intumescent systems commonly used in the plastic industry to provide flame retardancy do not represent a reliable and definitive solution for electrical insulation at temperatures higher than about 500°C, because of the carbonaceous nature of the char that is generated.

The present invention seeks to replace the prior art materials for coatings, e.g. extruded coatings made of solventless filled silicone rubber or organic polymeric compounds, or wound mica tape, with a more effective solution for producing thin coatings having an excellent performance.

### Summary of the Invention

The present invention relates to a method of preparing a metal substrate comprising a protective coating according to the claims, wherein a dispersion according to the claims is applied onto the metal substrate and dried to form the coating. The polymer of the coating thus prepared may be further crosslinked after drying.

Furthermore a dispersion for preparing a coating on a metal substrate comprising one or more preceramic polymers and one or more inorganic fillers, wherein at least one of the inorganic fillers has a lamellar or plate-like morphology, as well as one or more organic solvents for dissolving the preceramic polymer(s) is disclosed herein.

Furthermore, the invention relates to a solid cylindrical, stranded, bunched, shaped, sector-shaped, or compacted conductor of a power or signal or data cable comprising a protective coating, preparable by the method of the invention and a power or signal or data cable, comprising said solid cylindrical, stranded or bunched or shaped or sector-shaped or compacted conductor.

The coating is pyrolyzed in the case of a fire.

### Short Description of the Drawings

Figures 1 to 4 show photographs of the coatings of Comparative Examples 1 to 4.
Figure 5 shows a photograph of the coating of Example 5.
Figures 6 and 7 show SEM micrographs of the coatings of Comparative Examples 3 and 9, respectively.
Figures 8 and 9 show SEM micrographs of the coatings of Examples 5 and 8, respectively.
Figure 10 is a diagram of the breakdown test of Example 5.
Figure 11 is a diagram of the breakdown test of Example 6.
Figure 12 is a diagram of the breakdown test of Example 7.

### Detailed Description

The present invention concerns the realization of a method of preparing metal substrates comprising a protective coating having novel properties. In particular, the present method may be used for the production of flame resistant safety cables, such as power cables, signal cables and data cables. In the inventive method, a dispersion comprising
- one or more pre-ceramic polymers selected polysiloxanes, polysilsesquioxanes; polysilazanes, polysilsesquiazanes, polysilylcarbodiimides, polysilsesquicarbodiimides, polycarbosilanes; polysilanes; polyborosilanes, polyborosilazanes and polyborosiloxanes;
- one or more inorganic fillers, wherein at least one of the inorganic fillers has a lamellar or plate-like morphology and is selected from mica, Al₂O₃, boron nitride (BN), phyllosilicates and clays; and
- one or more solvents selected from C6-C9 aromatics, C2-C6 esters, C1-C6 ketones, C1-C6 alcohols, C4-C8 paraffins and chlorinated C1-C 6 hydrocarbons is applied onto the metal substrate.
The dispersion further comprises one or more inorganic fillers wherein at least one of the inorganic fillers has a lamellar or plate-like morphology and is selected from mica, Al₂O₃, boron nitride (BN), phyllosilicates and clays. The at least one filler has a lamellar or plate-like morphology and is selected from mica, Al₂O₃, boron nitride (BN), phyllosilicates and clays. The filler may be capable of being well-aligned parallel to the surface of the metal substrate. The application from fluid media produces an anisotropic microstructure. After drying for evaporation of the solvent(s) and prior to pyrolysis, the coatings form a matrix which comprises and preferably consists essentially of the small plates, flakes or lamellas aligned at the surface of the metal substrate in an anisotropic structure in an overall parallel manner, one or more preceramic polymer(s) and optionally one or more additonal flame resistant inorganic fillers. In the case of a fire such coatings provide a compact layer of the inorganic filler having the lamellar morphology that protects the metal substrate from oxidation and short circuit.

The metal of the substrate may be selected from any metal suitable for a desired purpose. In the case of cable applications, the metal would usually be copper, copper-clad metals or metal alloys, such as copper-clad steel, copper-clad aluminum and copper-clad aluminum-magnesium alloy, copper coated by another metal, such as tinned, silver-plated, nickel-plated copper, copper alloys, such as brass, CuCrZr and bronze, or, as the case may be, another electrically well-conducting metal, such as aluminium, tin, nickel, silver, gold, tungsten and alloys thereof. The metal may present in any form, e.g. in the form of a plate or tube, or of a solid conductor, a stranded conductor, a bunched conductor, a shaped conductor, a sector-shaped conductor or a compacted conductor in cable applications.
The flame resistant inorganic filller with lamellar morphology should have good dielectric strength values, sufficient thermal stability and desirably acceptable prices. Said filler is selected from mica having the general chemical formula: W(X, Y)₂₋₃Z₄O₁₀(OH, F)₂ where W corresponds to K, Na and Ca, or more rarely Ba, Rb, and Cs; the X, Y site is occupied by any two ions of Al, Mg, Fe, or Li, and less frequently of Mn, Cr, and Ti; Z normally is Si or Al, but may also be Fe or Ti (see e.g. R. J. Benbow, B. H. W. S. De Jong, and J. W. Adams, "Mica," in Ullmann's Encyclopedia of Industrial Chemistry, vol. 23, p. 131-143 . Wiley-VCH Verlag GmbH & Co. KGaA, 2000), phyllosilicates in general, alumina (Al₂O₃), boron nitride (BN) and clays. Mica in the Phlogopite modification is particularly preferred.

The largest dimension of the small plates, flakes or lamellas preferably ranges from (about) 10 to (about) 70 µm, more preferably form (about) 15 to (about) 55 µm. It was found that small plates or lamellas of this size can form a compact layer on the metal substrate after pyrolysis of the coating e.g. in the case of a fire.

Table 1 shows dielectric strenghts of some lamellar fillers.

**Table 1: Dielectric Strength of Selected Fillers**

| Lamellar Filler | Dielectric strength (MV/m) |
|---|---|
| Mica (Muscovite and Phlogopite, natural) | 118 |
| Alumina (99.9% Al₂O₃) | 13.4 |
| Boron nitride (BN) | 37.4 |

| | |
|---|---|
| [Source for dielectric strength values: CRC Handbook of Chemistry and Physics] | |

Table 2 shows further characteristics of some commercial inorganic powders that may be used as lamellar fillers.

**Table 2: Characteristics of Commercial Inorganic Powders Used as Fillers**

| **Material** | **Chemical composition** | **Producer** | **Grade** | **d₅₀ (µm)** |
|---|---|---|---|---|
| Mica | Aluminosilicates with potassium and iron | Minelco | B3000* | 5 |
| " | " | " | PW30-S | 18 |
| " | " | " | PW80-S | 35 |
| Alumina | Al₂O₃ (>99.7%) | Almatis | CT 3000 SG* | 0.5 |
| " | " | " | Gilox 63 | 17 |

| | | | | |
|---|---|---|---|---|
| * Used in a Comparative Example | | | | |

Additional secondary (non-lamellar) inorganic fillers are preferably selected from metal oxides, such as Al₂O₃, SiO₂, TiO₂ and ZrO₂, carbonates, such as CaCO₃, carbides, nitrides and carbonitrides, such as SiC, SiN and SiCN. If they are employed in the form of fine powders, they can be used to modify the rheology of the dispersion from which the coating is applied. A particularly preferred secondary inorganic filler is fumed SiO₂.

Preceramic polymers selected from one or more of polysiloxanes, polysilsesquioxanes; polysilazanes, polysilsesquiazanes, polysilylcarbodiimides, polysilsesquicarbodiimides, polycarbosilanes; polysilanes; polyborosilanes, polyborosilazanes and polyborosiloxanes are selected as the binding phase for the fillers. Generally speaking, preceramic polymers decompose into a ceramic system upon pyrolysis. They are usually silicon-based polymeric precursors characterized by the following oversimplified formula:

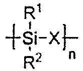

In this formula, X=O, N, C, Si and B (which is characteristic of polysiloxanes and polysilsesquioxanes; polysilazanes and polysilsesquiazanes; polysilylcarbodiimides, polysilsesquicarbodiimides and polycarbosilanes; polysilanes; polyborosilanes, polyborosilazanes and polyborosiloxanes, respectively), and R1 and R2 are generally organic substituents (e.g. methyl, vinyl, hydrogen, etc.). After pyrolysis (400-1000°C range), all organic components are progressively removed, and polymers are converted to a ceramic residue in the general Si-O-C-N-B system. The final composition of the ceramic is strongly dependent on the composition of the starting polymer and on the treatment conditions (mainly atmosphere and temperature). (See e.g. P. Colombo, G. Mera, R. Riedel, and G. D. Sorarù, "Polymer-Derived Ceramics: 40 Years of Research and Innovation in Advanced Ceramics," Journal of the American Ceramic Society, 93(7) 1805-37 (2010); R. Riedel, G. Mera, R. Hauser, and A. Klonczynski, "Silicon-based polymer-derived ceramics: Synthesis properties and applications - A review," Journal of the Ceramic Society of Japan, 114(1330) 425-44 (2006)).

Polysiloxanes (characterized by a Si-O backbone) are particularly preferred because of their generally high chemical stability, inertness, virtually absent toxicity, easy-handling, availability as commercial products and relatively low price. After pyrolysis in the 400-1000°C temperature range in oxidizing atmosphere, polysiloxane provides an amorphous SiO₂ ceramic residue, with a ceramic yield which is dependent to the polymer chemistry.

The main properties of two preferred commercial products (Silres MK and Silres H62C, Wacker Chemie GmbH, München, Germany) are summarized in Table 3:

**Table 3: Preferred Polysiloxanes**

| | **Chemical composition** | **Ceramic yield after pyrolysis (wt%)** | **Form** |
|---|---|---|---|
| Silres MK | methyl-polysiloxane | 84 | Solid (Tg=35-55°C) |
| Silres H62C | methyl-phenyl-vinyl-hydrogen polysiloxane | 58 | Viscous liquid |

Both polymers are soluble in aromatics, alcohols, esters, ketones and selected paraffins, chlorinated hydrocarbons and/or mixtures of those solvents.

The coatings further disclosed herein are prepared by application from fluid media or dispersions of various viscosities. Typical coating procedures for wires and other forms of conductors of cables, as mentioned above, are dip-coating, extrusion or spray coating. For flat extended substrates, there are also numerous other coating procedures available, such as spin coating, print coating, spread coating and kiss coating. For wires and other forms of conductors, ususally spray coating and in particular dip-coating are preferred.

The fluid media further disclosed herein or the dispersions used according to the present invention can be prepared by any mechanical mixing process, optionally in combination with ultrasonic devices, e.g. ultrasonic baths and ultrasonic probes. A ball milling procedure is typically used for the preparation of the coating formulations. However, any other mixing device, e.g. a simple kitchen blender, may be used as well.

The inorganic fillers, usually in the form of powders, are dispersed in a proper organic solvent system together with a proper dispersant inside a container, where (e.g. spherical) milling media are added. The preceramic polymer(s), that act(s) as a low-loss binder, could be added either at the beginning of the dispersion process, or in a second step.

The organic solvents are selected from one or more of C6-C9 aromatics, C2-C6 esters, C1-C6 ketones, C1-C6 alcohols, C4-C8 paraffins and chlorinated C1-C6 hydrocarbons (e.g. toluene, isopropyl alcohol, acetone, ethanol, hexane, or mixtures thereof).

The organic solvents are selected based mainly on their ability to effectively dissolve the preceramic polymer previously selected. For polysiloxanes, solvents are preferably selected from toluene, isopropyl alcohol, acetone, ethanol, pentane and hexane and mixtures thereof.

To identify the best solvent/dispersant combination, usually a standard dispersion test is made. Toluene/isopropyl alcohol mixtures or hexane/ isopropyl alcohol mixtures (e.g. 50:50 by weight, but also in other proportions) were found to be effective solvent mixtures in many cases.

A dispersant may be added. A useful example is KV-9056 (Zschimmer & Schwarz; plus about 3 - about 5 wt%, based on the powder content), although many other commercial dispersant may be used as well.

Additional additives may be added either during or after the dispersion process, such as rheology modifiers (e.g. solvents, thickening agents, e.g. the above-mentioned secondary inorganic fillers), anti-foaming agents, skin-retarders or others, such as colorants. Curing agents are usually added, when crosslinking of the preceramic polymer is desired. Suitable curing agents for specific preceramic poylmers are well-known to the person skilled in the art and are e.g. selected from peroxides or cationic curing agents, such as zinc acetylacetonate and Pt compounds. After the dispersion step, dispersions could also be de-aired under vacuum, as well as conditioned to specific temperature and/or pressure.

Total dispersion time could vary from (about) 1 h to several days (typically (about) 1 - (about) 2 days).

The solid content of preceramic polymer plus inorganic filler powders of the fluid dispersions is typically about 20 to about 90 wt%, based on the total weight of the dispersion. Optional further additives may additionally be present in minor amounts (usually < about 5% by weight, based on the total weight of the dispersion). The content of the plate-like or lamellar filler(s) typically ranges from about 10 wt% to about 80 wt%, preferably from about 30 to about 60 wt%, more preferably from about 45 to about 60 wt%, based on the total weight of the dispersion. The content of the preceramic polymer(s) usually ranges from about 5 wt% to about 50 wt%, preferably from about 5 to about 35 wt%, based on the total weight of the dispersion. Additional or secondary fillers may be present in a range of from 0 wt% to about 5 wt%, preferably about 0.2 wt% to about 3 wt%.

In the final dried coating, the total filler (lamellar filler plus optional secondary inorganic filler(s)) content may typically vary from about 5 to about 90 vol%, preferably from about 35 to about 85 vol%, calculated as *vol_{filler}*/*(vol_{filler}* + *vol_{preceramic polymer}).* Vice versa, the total preceramic content of the final dried coating may typically vary from about 10 to about 90 vol%, preferably from about 20 to about 65 vol%, based on the combined content by volume of preceramic polymer(s) and filler(s).In a particularly preferred embodiment, the lamellar filler content varies from about 55 or 60 to about 85 vol%, based on the of the final dried coating, the remainder being preceramic polymer(s) and optional dispersant.

The dispersions media are then ready to be applied onto the metal substrates. The substrates are immersed in the dispersion and subsequently withdrawn at a constant speed. Optionally, a nozzle with specific dimensions could be inserted after the extraction of the sample, in order to have a better control on the final thickness of the coating. After the extraction of the sample, the solvent is then evaporated either under ambient conditions, or under controlled conditions (temperature, pressure, atmosphere, flow and irradiation). After the drying step, the coating could be sujected to a crosslinking step, if necessary, usually by heating, but other methods, such as UV or electron beam irradiation, are also applicable. The coating is then considered to be completed, and the coated metal substrate, e.g. coated conductor, could undergo a next step of the production process, e.g. in the cable manufacturing.

Alternatively, after the above coating process, (a) further protective coating(s) improving fire-resistance may be applied (with identical or different fluid media) to create additional layers with the same or a different composition (e.g. the same polymer or a different polymer which does not necessarily have to be preceramic polymer and may preferably be selected from any non-halogen-containg polymer; and/or the same or a differerent lamellar filler) so as to increase the overall coating thickness. Co-deposition processes can also be used together with the further coating(s) to simultaneously create more than one layer with identical or different composition.

Besides the main coating(s) providing fire-resistance, other secondary coating(s) could be added below (e.g.primers) and/or on top of the fire-resistant coating which could add or improve specific functions and characteristics, (e.g. anti-sticking properties, mechanical consistency) that are not necessarily related to fire-protection or electrical insulation.

In the case of safety cables, an electrical insulation layer is generally applied on top of the coating(s). Such insulations can be made of any material well-known to the person skilled in the art for this purpose, e.g. silicone rubber, chlorine-free organic polymeric compounds, such as polyolefins, e.g. polyethylene (PE) and polypropylene (PP); ethylene copolymers or terpolymers, e.g. EPR, EPDM rubber, H-EPR (high module ethylene-propylene rubber), H-EPDM rubber, EVA, EEA and EBA; thermoplastic elastomers (TPEs), e.g. thermoplastic polyurethane elastomers (TPE-U), thermoplastic polyester elastomers (TPE-E), thermoplastic polyolefin elastomers (TPE-O) and thermoplastic styrene-ethene-butene-styrene elastomers TPE-S); high-temperature polymers, e.g. PVDF, ECTE, ETFE, FEP, PTFE, PFA, PEI, PEIC, PI and PEEK; and, less preferably, halogen-containing organic polymers, e.g. CR, CSM, CM and PVC; and mixtures thereof. All the above polymers and mixtures thereof may be optionally loaded with inorganic filler(s) and/or nanofiller(s), e.g. nanoclays, or with another flame retardant synergist. They can optionally form a char and/or ceramifiable compositions. They may also (additionally) be filled with one or more flame-retardant agents, e.g. fillers (such a metal hydroxides, for example aluminium trihydroxide, magnesium hydroxide and/or hydromagnesite/huntite) or intumescent systems, e.g. polyphosphates or cyanurates. Furthermore, they may be cross-linked, if applicable, e.g. by peroxide, silane or radiation crosslinking. (See e.g. DE 44 00 938 C1, EP 0 978 128 B1, EP 0 708 455 A1; GB 2460512, GB 2 360 780 and WO 01/41159 A1)

The present invention is applied to a substrate selected from cylindrical, stranded, bunched, shaped, sector-shaped or compacted conductors.

With the proposed invention, substantial improvements could be made concerning all the different aspect of this application (materials selected, coating procedure and microstructure) to produce coatings with enhanced performaces. Materials proposed could guarantee better performances in terms of electrical insulation and oxidation protection, and a lower thickness could be achieved, if compared to the current solutions. The coating technology from fluid media could represent a simple and effective process, if compared to standard extrusion of plastic compounds.

If compared to standard protective layers, the anisotropic microstructure provides an enhanced insulating effect, in terms of (but not limited to) oxidation protection, barrier for the diffusion of fluids and electrical insulation, as well as improved mechanical properties, such as flexural strength and tolerance to crack propagation.

### EXAMPLES

### I. COMPARATIVE EXAMPLES 1-4 AND EXAMPLES 5-8

### A. Preparation of Preceramic Polymer/Filler Formulations

Dispersions for the dip-coating process were prepared by ball-milling. In a standard ball milling process, all formulation components (see Table 4) are homogenized in a cylindrical container, generally a bottle, rotating on its axis, where milling media, generally ceramic or metallic spheres, are added to enhance the homogenization process.

Ceramic powders together with preceramic polymers were dispersed in a toluene/ isopropyl alcohol or hexane/isopropyl alcohol mixture (for example, 50:50 weight proportion, but other proportions are also possible) by ball milling. The total solid content (powders + polymers) varied approximately in the 40-90 wt% range, depending on the ceramic powder used and on the desired viscosity. A proper dispersant (plus 1-6 wt%, based on the total mass of the ceramic powders) was also added. Generally, a mixture of Silres MK and H62C was used as binder (MK/H62C=85/15 in weight).

For the preparation of the dispersions, a 2-step ball milling procedure was followed: in the first step, powders were dispersed by ball-milling in the solvent/dispersant system for 24 h; subsequently, binders were added and the final mixture was milled for additional 24 h. As milling media, ZrO₂ balls (diameter 5-10 mm) were used.

After the milling process, dispersions were poured into a glass beaker. Optionally, some cyclohexanone (approximately 1 cm³ per 100 cm³ of dispersion) was added as a skin-retarder, and dispersion was subsequently de-aired under moderate vacuum for 10 minutes under slow magnetic stirring. Finally, solvent content was adjusted to obtain the desired viscosity.

In some cases, fumed SiO₂ (or similar fumed oxides such as Al₂O₃, TiO₂ and ZrO₂) was added (+0.5 wt%) to control the rheology of the dispersions by increasing the viscosity.

### B. Preparation of the Coatings

Coatings were realized on copper sheets (thickness 150 µm) and wires (1.4 mm diameter) by dip-coating. In a standard dip coating process, the thickness of the final coating can be generally calculated with the Landau-Levich relationship (valid for Newtonian fluids) [reference: J. Brinker and G. W. Scherer, "Sol-gel science - The physics and chemistry of sol-gel processing," (1990)].

Copper substrates were immersed into the coating dispersion, and subsequently withdrawn at a constant speed of approximately 2 mm/sec. The final thickness of the coatings varied between about 20 and about 200 µm, with a target thickness of about 100 µm or less. This procedure was sometimes repeated with the same or a different coating dispersion.

After the deposition of the coating, samples were dried in air at room temperature, and/or in oven at 85°C. The drying speed is strongly influenced mainly by the type of solvent used, solvent content and the binder content, ranging from few seconds (90 vol% fillers) to several minutes (50 vol% fillers). Shrinkage is generally observed after the drying process, proportional to the amount of evaporated solvent.

Sometimes the immersing procedure, as mentioned above, was repeated with the same or a different coating dispersion after drying of the first coating layer.

Some examples of formulations produced are reported in Table 4:

**Table 4: Formulation Components**

| Comparative Examples | Filler (wt%) | Silres MK (wt%) | Silres H62C (wt%) | Dispersant (wt%) | Solvent (wt%) |
|---|---|---|---|---|---|
| **(1)** Al₂O₃ CT3000SG 50 vol% in final coating | 53 | 30 | 2 | 2 | 13 |
| **(2)** Al₂O₃ Gilox 63 50 vol% in final coating | 54 | 30 | 2 | 2 | 12 |
| **(3)** Mica B3000 50 vol% in final coating | 51 | 18 | 3 | 3 | 25 |
| **(4)** Mica PW80-S 90 vol% in final coating | 50 | 2 | <1 | 2 | 46 |

| Examples | Filler (wt%) | Silres MK (wt%) | Silres H62C (wt%) | Dispersant (wt%) | Solvent (wt%) |
|---|---|---|---|---|---|
| **(5)** PW30-S 50 vol% in final coating | 52 | 19 | 3 | 3 | 23 |
| **(6)** PW80-S 50 vol% in final coating | 53 | 19 | 3 | 3 | 22 |
| **(7)** 1^{st} layer PW30-S 50 vol% in final layer; | 52 (1^{st}) | 19 (1^{st}) | 3 (1^{st}) | 3 (1^{st}) | 23(1^{st}) |
| 2^{nd} layer Gilox 63 50 vol% in final layer | 54 (2^{nd}) | 30 (2^{nd}) | 2 (2^{nd}) | 2 (2^{nd}) | 12 (2^{nd}) |
| **(8)** 1^{st} layer PW30-S 70 vol% in final layer; | 55 | 8 | 1 | 3 | 31 |
| 2^{nd} laver: identical to first layer | | | | | |

### II. COMPARATIVE EXAMPEL 9

The following two silicone rubber-based batches were prepared (in analogy to Example 1 of GB 2 192 401 A):

**Batch 1**

| | parts by weight |
|---|---|
| Bluesil® MF 370 U | 100 |
| Mica SX400 | 175 |
| 2,4-Dichlorobenzoyl peroxide (50%) | 2 |

(Bluesil® MF 370 U is a high tear strength poly-dimethyl-/vinyl-methyl siloxane rubber produced by the company Bluestar Siilcones, France; Mica SX 400 is a micronized mica supplied by LKAB Minerals, Sweden).

**Batch 2**

| | parts by weight |
|---|---|
| Silastic® New GP 700 | 100 |
| Fumed SiO₂ - | 53 |
| 2,4-Dichlorobenzoyl peroxide (50%) | 2 |

(Silastic® New GP 700, chemically identical with Xiameter® RBB-2100-70 Base, is a silicone rubber suitable for extrusion produced by the company Dow Corning, USA; the fumed SiO₂ was SiO₂- S-2406, supplied by the company CERAC, part of the Materion Advanced Materials Business Group, USA)

Both batches were prepared on a rubber compound 2 roll-mill, the rolls being cooled at a temperature of about 25 °C. For both batches, at first the silicone polymer was rolled, then the filller (mica and SiO₂, respectively) was slowy added in portions, and finally the peroxide was added. The mixing time on the mill was about 15 minutes.

In both cases, a sheet having a thickness of about 1.2 mm was removed from the roll.

### Final elastomeric composition

A 1.2 mmm Batch 1-sheet was placed on the same rubber compound 2 roll-mill, again cooled at about 25°C, then a 1.2 mm Batch 2-sheet (weight ratio Batch 1-sheet : Batch 2-sheet of 1: 1) was added and mixed for about 15 minutes.

Thereafter, a sheet of the final elastomeric composition having a thickness of about 1.2 mm was removed from the roll.

### Preparation of cross-linked plates

A sheet of the final elastomeric composition having a thickness of about 1.2 mm was put in a press and pressed for 15 minutes at a temperature of 115 °C and a pressure of 200 kN. The resulting plate (or "coating" of the press tool) was removed from the press and cooled in air.

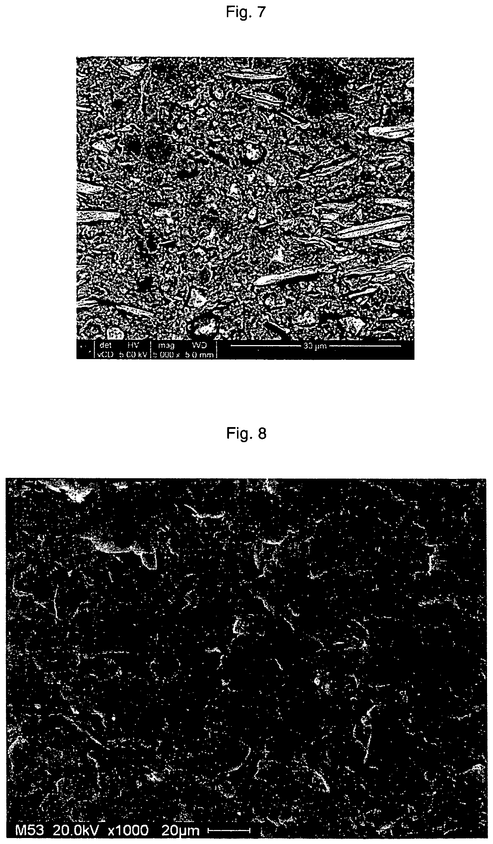

A SEM micrograph of the resulting plate is shown in Figure 7.

### III. PROPERTIES OF THE COATINGS OF COMPARATIVE EXAMPLES 1 - 4 AND 8 AND OF EXAMPLE 5

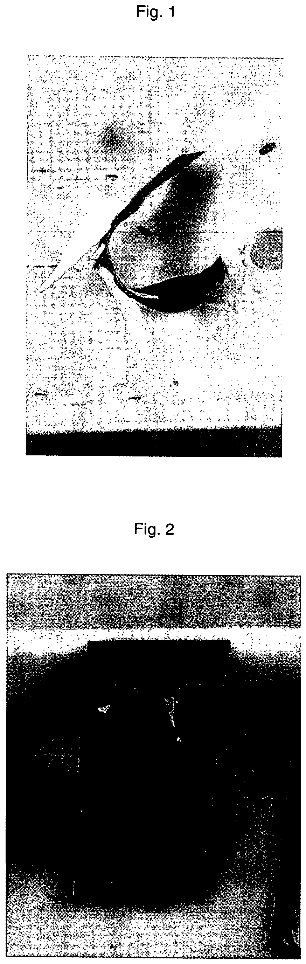

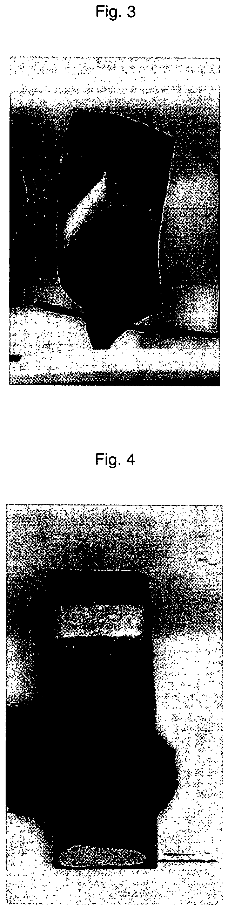

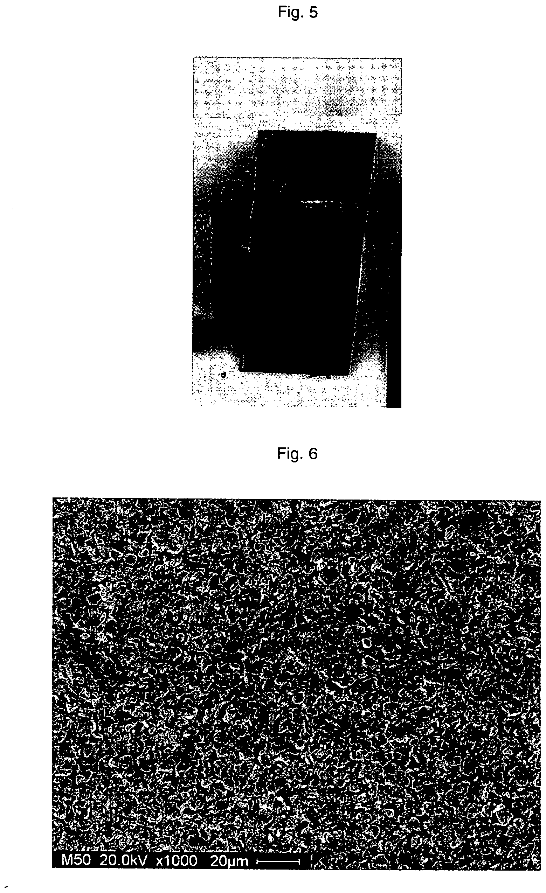

A comparison of the coatings made by the use of the formulations of Comparative Examples 1 (Fig. 1) and 2 (Fig 2) as well as of Comparative Example 3 (Fig. 3) and Example 5 (Fig. 8) shows that the mechanical consistency and stability of the coatings increase with the size of the lamellar particles. The comparison of Figs. 3 and 5 also demonstrates that generally a better oxidation protection can be achieved with larger filler particles. The SEM images of Comparative Example 3 (Fig. 6) and Example 5 (Fig. 8) show that larger lamellar particles also provide a better sealing microstructure.

Better oxidation protection is also generally observed by increasing the preceramic polymer content from 10 vol% up to approximately 50 vol% (coating produced with formulation of Example 4 (Fig. 4) vs. coating produced with formulation of Example 5 (Fig. 8)); a too high polymer content instead is generally not favorable because of the higher shrinkage of the whole coating, which causes extensive cracking.

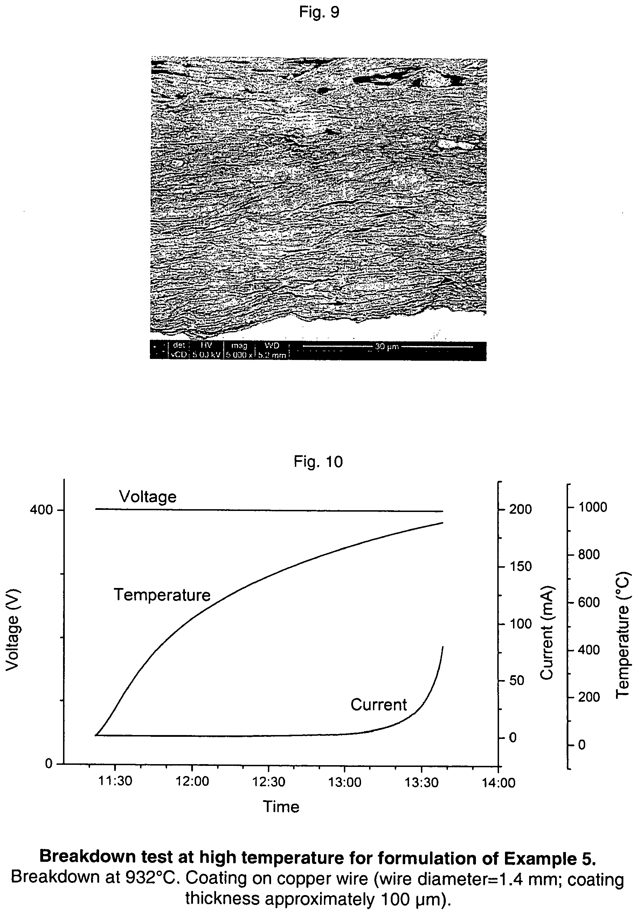

Fig. 7 shows that the composition of Comparative Example 9 which does not comprise any solvent does not yield a coating wherein the plate-like lamellar mica particles are well-aligned at the surface in a parallel manner, in contrast to the coatings prepared according to the present invention, as shown in Figs. 8 and 9.

### IV. Fire-resistance of Examples 5 and 6

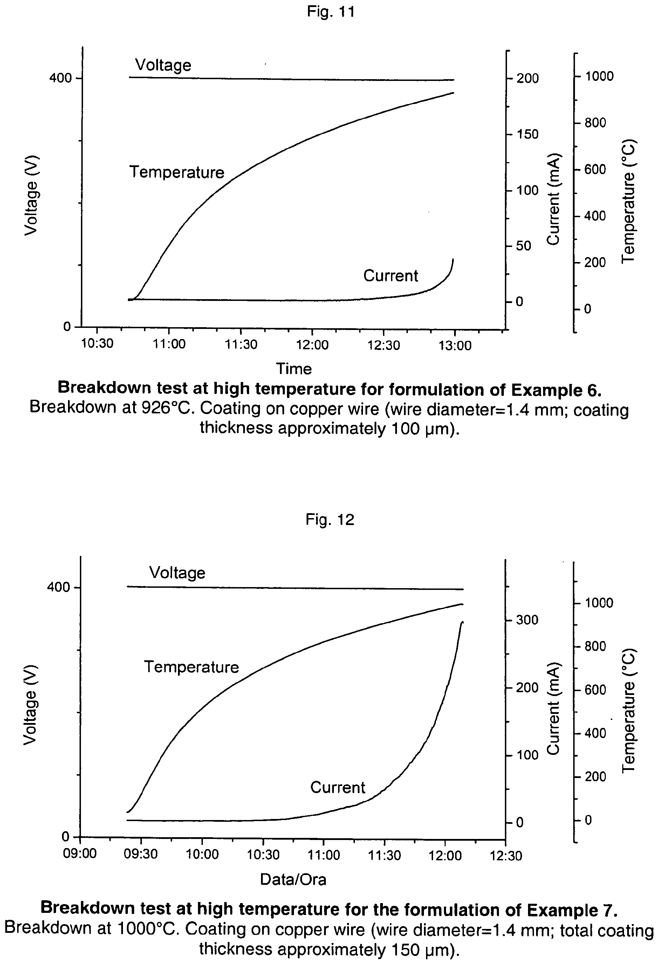

The coating of Examples 5 and 6 provided circuit integrity up to approximately 930°C under an applied voltage of 400 V (AC) (Fig. 10 and Fig. 11, respectively).

### V. Double Layer Coating of Example 7 and Fire-resistance

In Example 7, a double layer coating was produced. The first layer (thickness 50 µm) was produced by formulation 5 with the same procedure as described above. After the complete drying of the first coating, a second layer (thickness 100 µm) was produced, following the exact same procedure followed for the first layer, except that Al₂O₃ was used as the lamellar filler (see Table 4).

In this case, the first coating layer provides most of the oxidation protection and electrical insulation up to approximately 930°C (as demonstrated for Examples 5 and 6), while the second coating layer increases electrical insulation performances up to approximately 1000°C (see Fig. 12).

## Claims

1. A method of preparing a metal substrate comprising a protective coating, wherein a dispersion comprising
- one or more pre-ceramic polymers selected polysiloxanes, polysilsesquioxanes; polysilazanes, polysilsesquiazanes, polysilylcarbodiimides, polysilsesquicarbodiimides, polycarbosilanes; polysilanes; polyborosilanes, polyborosilazanes and polyborosiloxanes;
- one or more inorganic fillers, wherein at least one of the inorganic fillers has a lamellar or plate-like morphology and is selected from mica, Al₂O₃, boron nitride (BN), phyllosilicates and clays; and
- one or more solvents selected from C6-C9 aromatics, C2-C6 esters, C1-C6 ketones, C1-C6 alcohols, C4-C8 paraffins and chlorinated C1-C 6 hydrocarbons is applied onto the metal substrate and dried to form the coating,
**characterized in that**
the metal substrate is a solid cylindrical, stranded or bunched or shaped or sector-shaped or compacted conductor of a power or signal or data cable.

2. The method of claim 1, wherein the applying of said dispersion involves dip-coating, extrusion or spray coating of the metal substrate.

3. The method of claim 1 or 2, wherein the coating thus prepared is further crosslinked after drying.

4. The method of any of claims 1 to 3, wherein after the preparation of the first coating a second coating identical to or different from the first coating is prepared on top of the first coating.

5. The method of any of claims 1 to 4, wherein the content by weight of the filler(s) having a lamellar or plate-like morphology in the dispersion is 10 to 80 wt%, preferably 30 to 60 wt%, more preferably 45 to 60 wt%, based on the total weight of the dispersion.

6. The method of any of claims 1 to 5, wherein the content by weight of the of preceramic polymer(s) in the dispersion is 5 to 50 wt%, preferably 5 to 35 wt%, based on the total weight of the dispersion.

7. The method of any of claims 1 to 6, wherein the dispersion further comprises a dispersant.

8. The method of any of claims 1 to 7, wherein the dispersion further comprises additional additives selected from curing agents, rheology modifiers, anti-foaming agents, skin-retarders and colorants.

9. The method of any of claims 1 to 8, wherein the metal of the metal substrate is selected from copper, a copper-clad metal or metal alloy, copper coated by another metal or a copper alloy.

10. The method of any of claims 1 to 9, wherein one or more secondary coating(s) are applied below and/or on top of the protective coating.

11. A solid cylindrical, stranded or bunched or shaped or sector-shaped or compacted conductor of a power or signal or data cable comprising a protective coating, preparable by the method of any of claims 1 to 10.

12. A power or signal or data cable, comprising the solid cylindrical, stranded or bunched or shaped or sector-shaped or compacted conductor of claim 11.

13. The power or signal or data cable of claim 12, further comprising an insulation layer on top of the protective coating(s).

## Patentansprüche

1. Verfahren zur Herstellung eines Metallsubstrates enthaltend eine Schutzbeschichtung, worin eine Dispersion enthaltend
- einen oder mehrere präkeramische Polymere ausgewählt aus Polysiloxanen, Polysilsesquioxanen, Polysilazanen, Polysilsesquiazanen, Polysilylcarbodiimiden, Polysilsesquicarbodiimiden, Polycarbosilanen; Polysilanen, Polyborosilanen, Polyborosilazanen und Polyborosiloxanen;
- ein oder mehrere anorganische Füllmittel, wobei mindestens eines der anorganischen Füllmittel eine lamellare oder plattenähnliche Morphologie aufweist und ausgewählt ist aus Glimmer, Al₂O₃, Bornitrid (BN), Phyllosilicaten und Lehm; und
- ein oder mehrere Lösungsmittel ausgewählt aus C₆-C₉-Aromaten, C₂-C₆-Estern, C₁-C₆-Ketonen, C₁-C₆-Alkoholen, C₄-C₈-Paraffinen und chlorierten C₁-C₆-Hydrocarbonen,
auf das Metallsubstrat aufgebracht wird und getrocknet wird, um die Beschichtung zu bilden,
**dadurch gekennzeichnet, dass** das Metallsubstrat ein fester zylindrischer, strangförmiger oder gebündelter oder geformter oder sektorförmiger oder verdichteter Leiter eines Strom- oder Signal- oder Datenkabels ist.

2. Verfahren nach Anspruch 1, wobei das Aufbringen der Dispersion Tauchbeschichten, Extrudieren oder Sprühbeschichten des Metallsubstrats umfasst.

3. Verfahren nach Anspruch 1 oder 2, wobei die dadurch hergestellte Beschichtung nach Trocknen weiter quervernetzt wird.

4. Verfahren nach einem der Ansprüche 1 bis 3, wobei nach der Herstellung der ersten Beschichtung eine zweite Beschichtung, welche identisch oder unterschiedlich der ersten Beschichtung ist, auf der ersten Beschichtung hergestellt wird.

5. Verfahren nach einem der Ansprüche 1 bis 4, wobei der Gewichtsgehalt des Füllmittels oder der Füllmittel aufweisend eine lamellare oder plattenähnliche Morphologie in der Dispersion 10 bis 80 Gew.-%, bevorzugt 30 bis 60 Gew.-%, besonders bevorzugt 45 bis 60 Gew.-% basierend auf dem Gesamtgewicht der Dispersion ist.

6. Verfahren nach einem der Ansprüche 1 bis 5, wobei der Gewichtsgehalt des präkeramischen Polymers oder der präkeramischen Polymere in der Dispersion 5 bis 50 Gew.-%, bevorzugt 5 bis 35 Gew.-%, basierend auf dem Gesamtgewicht der Dispersion ist.

7. Verfahren nach einem der Ansprüche 1 bis 6, wobei die Dispersion weiterhin ein Dispersionsmittel umfasst.

8. Verfahren nach einem der Ansprüche 1 bis 7, wobei die Dispersion weiter zusätzliche Additive ausgewählt aus Härtungsmitteln, rheologischen Modifizierungsmitteln, Antischaummitteln, Hautverzögerungsmitteln und Farbstoffen umfasst.

9. Verfahren nach einem der Ansprüche 1 bis 8, wobei das Metall des Metallsubstrats aus Kupfer, einem kupferbeschichteten Metall oder Metalllegierung, Kupfer beschichtet mit einem anderen Metall oder einer Kupferlegierung ausgewählt ist.

10. Verfahren nach einem der Ansprüche 1 bis 9, wobei ein oder mehrere Zweitbeschichtungen unter und/oder oben auf der schützenden Beschichtung aufgebracht werden.

11. Fester zylindrischer, strangförmiger oder gebündelter oder geformter oder sektorförmiger oder verdichteter Leiter eines Strom- oder Signal- oder Datenkabels umfassend eine Schutzbeschichtung hergestellt durch das Verfahren nach einem der Ansprüche 1 bis 10.

12. Strom- oder Signal- oder Datenkabel, umfassend einen festen zylindrischen, strangförmigen oder gebündelten oder geformten oder sektorförmigen oder verdichteten Leiter gemäß Anspruch 11.

13. Strom- oder Signal- oder Datenkabel nach Anspruch 12, weiterhin umfassend eine isolierende Schicht auf der Oberfläche der schützenden Beschichtung oder schützenden Beschichtungen.

## Revendications

1. Méthode de préparation d'un substrat métallique comprenant un revêtement protecteur, dans laquelle une dispersion comprenant
- un ou plusieurs polymères précéramiques sélectionnés parmi les polysiloxanes, les polysilsesquioxanes ; les polysilazanes, les polysilsesquiazanes, les polysilylcarbodiimides, les polysilsesquicarbodiimides, les polycarbosilanes ; les polysilanes ; les polyborosilanes, les polyborosilazanes et les polyborosiloxanes ;
- une ou plusieurs charges inorganiques, dans laquelle au moins l'une des charges inorganiques présente une morphologie lamellaire ou de type plaque, et est sélectionnée parmi le mica, Al₂O₃, le nitrure de bore (BN), les phyllosilicates et les argiles ; et
- un ou plusieurs solvants sélectionnés parmi les C6-C9 aromatiques, les C2-C6 esters, les C1-C6 cétones, les C1-C6 alcools, les C4-C8 paraffines et les C1-C6 hydrocarbures chlorés est appliquée sur le substrat métallique et séchée pour former le revêtement,
**caractérisée en ce que**
le substrat métallique est une âme massive cylindrique, toronnée ou en torsade ou profilée ou sectorale ou compacte d'un câble d'alimentation ou de signal ou de données.

2. Méthode selon la revendication 1, dans laquelle l'application de ladite dispersion implique un revêtement par immersion, une extrusion ou un revêtement par pulvérisation du substrat métallique.

3. Méthode selon la revendication 1 ou 2, dans laquelle le revêtement ainsi préparé est en outre réticulé après séchage.

4. Méthode selon l'une quelconque des revendications 1 à 3, dans laquelle après la préparation du premier revêtement un second revêtement identique au ou différent du premier revêtement est préparé au-dessus du premier revêtement.

5. Méthode selon l'une quelconque des revendications 1 à 4, dans laquelle la teneur en poids de la(des) charge(s) ayant une morphologie lamellaire ou de type plaque dans la dispersion est de 10 à 80 % en poids, de préférence de 30 à 60 % en poids, de manière davantage préférée de 45 à 60 % en poids, sur la base du poids total de la dispersion.

6. Méthode selon l'une quelconque des revendications 1 à 5, dans laquelle la teneur en poids du(des) polymère(s) précéramique(s) dans la dispersion est de 5 à 50 % en poids, de préférence de 5 à 35 % en poids, sur la base du poids total de la dispersion.

7. Méthode selon l'une quelconque des revendications 1 à 6, dans laquelle la dispersion comprend en outre un agent de dispersion.

8. Méthode selon l'une quelconque des revendications 1 à 7, dans laquelle la dispersion comprend en outre des additifs supplémentaires sélectionnés parmi les agents de durcissement, les modificateurs de rhéologie, les agents antimousse, les retardateurs de peau et les colorants.

9. Méthode selon l'une quelconque des revendications 1 à 8, dans laquelle le métal du substrat métallique est sélectionné parmi le cuivre, un métal ou alliage métallique revêtu de cuivre, le cuivre revêtu d'un autre métal ou un alliage de cuivre.

10. Méthode selon l'une quelconque des revendications 1 à 9, dans laquelle un ou plusieurs revêtement(s) secondaire(s) sont appliqués en dessous et/ou au-dessus du revêtement protecteur.

11. Âme massive cylindrique, toronnée ou en torsade ou profilée ou sectorale ou compacte d'un câble d'alimentation ou de signal ou de données comprenant un revêtement protecteur, pouvant être préparé par la méthode selon l'une quelconque des revendications 1 à 10.

12. Câble d'alimentation ou de signal ou de données, comprenant l'âme massive cylindrique, toronnée ou en torsade ou profilée ou sectorale ou compacte selon la revendication 11.

13. Câble d'alimentation ou de signal ou de données selon la revendication 12, comprenant en outre une couche isolante au-dessus du(des) revêtement(s) protecteur(s).
